# EUROPÄISCHE PATENTANMELDUNG

(11) **EP 2 050 560 A1**
(43) Veröffentlichungstag der Anmeldung: **22.04.2009**
(21) Anmeldenummer: 08163449.5
(22) Anmeldetag: 02.09.2008
(51) Int. Cl.: B29D 30/30, B29D 30/16, B29D 30/60, B29C 47/06

(54) **Vorrichtung zum Aufbringen von Materialstreifen auf einen Reifenrohling oder eine Aufbautrommel**

(30) Priorität: 18.10.2007 DE 102007049870
(71) Anmelder: Continental Aktiengesellschaft, 30165 Hannover (DE)
(72) Erfinder: Geffert, Ulrich, 31848 Nienstedt (DE); Kastens, Sven, 30890 Barsinghausen (DE); Seevers, Jörn, 31303 Burgdorf (DE)
(74) Vertreter: Finger, Karsten

(57) **Zusammenfassung**

Die Erfindung betrifft eine Vorrichtung zum Aufbringen eines Materialstreifens (2b) aus einer Kautschukmischung auf einen Reifenrohling (7) oder eine Aufbautrommel, mit einer Belegeeinheit (8), welche eine Zuführeinheit (1), eine Kalandriereinrichtung (3) für eine extrudierte Rundschnur (2a) und zumindest eine Belegerolle (5) für den kalandrierten Materialstreifen (2b) aufweist.

Es sind zumindest zwei Extruder (10a, 10b, 10c) vorgesehen, in welchen jeweils eine Kautschukmischung hergestellt wird, die sich von der oder den Kautschukmischung(en), welche in dem oder den anderen Extruder(n) hergestellt wird, unterscheidet, wobei die Position der Belegeeinheit (8) und/oder der Extruder (10a, 10b, 10c) derart veränderbar ist, dass wahlweise einer der Extruder gegenüber der Belegeinheit (8) positionierbar ist.

## Beschreibung

Die Erfindung betrifft eine Vorrichtung zum Aufbringen eines Materialstreifens auf einen Reifenrohling oder eine Aufbautrommel, mit einer Belegeeinheit, welche eine Zuführeinheit und eine Kalandriereinrichtung für eine extrudierte Rundschnur und zumindest eine Belegerolle für den kalandrierten Materialstreifen aufweist.

Aus der WO 2006/ 000843 A1 ist eine Vorrichtung zum Herstellen eines Materialstreifens bekannt, bei der zwei Extruder zum Herstellen unterschiedlicher Kautschukmischungen vorgesehen sind. Die Vorrichtung weist eine Düse zum Ausformen des Materialstreifens auf, wobei der Düse wahlweise die Kautschukmischung des einen und des anderen Extruders zugeführt werden kann. Der Einsatz einer Düse gestattet nur die Verarbeitung von relativ niedrigviskosen Kautschukmischungen.

Bei den üblichen bekannten Vorrichtungen der eingangs genannten Art mit einer Belegeeinheit aus Zuführeinheit, Kalandriereinrichtung und Belegerolle ist ein einziger Extruder vorgesehen, sodass ein Mischungswechsel ein Entleeren und Neubefüllen des Extruders erfordert. Ein rationeller Einsatz dieser Vorrichtungen in einer hochflexiblen Fertigungsanlage zur Herstellung von Fahrzeugluftreifen ist daher nicht möglich.

Der Erfindung liegt die Aufgabe zu Grunde, eine Vorrichtung der eingangs genannten Art derart auszuführen, dass es auf unkomplizierte und rationelle Weise möglich ist, Materialstreifen aus unterschiedlichen Kautschukmischungen auf die Reifenaufbautrommel oder den Reifenrohling aufbringen zu können.

Gelöst wird die gestellte Aufgabe erfindungsgemäß dadurch, dass zumindest zwei Extruder vorgesehen sind, in welchen jeweils eine Kautschukmischung hergestellt wird, die sich von der oder den Kautschukmischung(en), welche in dem oder den anderen Extruder(n) hergestellt wird, unterscheidet, wobei die Position der Belegeeinheit und/oder der Extruder derart veränderbar ist, dass wahlweise einer der Extruder gegenüber der Belegeeinheit positionierbar ist.

Die gemäß der Erfindung vorgesehene Kombination einer Belegeeinheit mit zwei oder mehr Extrudern gestattet einen unkomplizierten und einfachen Wechsel zwischen den Extrudern und ermöglicht es, zügig Reifenbauteile aus unterschiedlichen Gummimischungen durch Spulen eines Materialstreifens auf den Reifenrohling oder die Aufbautrommel aufbringen zu können.

Auf besonders einfache Weise lassen sich die Extruder verschieben bzw. verstellen, wenn sie nebeneinander oder übereinander angeordnet sind.

Alternativ zu einer Verstellmöglichkeit der Extruder kann auch die Belegeeinheit verstell- bzw. verschwenkbar angeordnet sein. Es ist grundsätzlich möglich, lediglich die Zuführeinheit der Belegeeinheit verschwenk- bzw. verstellbar anzuordnen. Diese Ausführungsvarianten gestatten es, auf einfache und schnelle Weise die Position der Belegeeinheit gegenüber den Extrudern zu verändern, um eine Rundschnur aus einer bestimmten Kautschukmischung einsetzen zu können.

Weitere Merkmale, Vorteile und Einzelheiten der Erfindung werden anhand der Zeichnung, die schematisch mehrere Ausführungsbeispiele darstellt, näher beschrieben. Dabei zeigen
Fig. 1 und Fig. 2 Ansichten einer Ausführungsvariante einer erfindungsgemäßen Vorrichtung und
Fig. 3 und 4 sowie Fig. 5 und 6 jeweils Ansichten von weiteren Ausführungsvarianten der Erfindung.

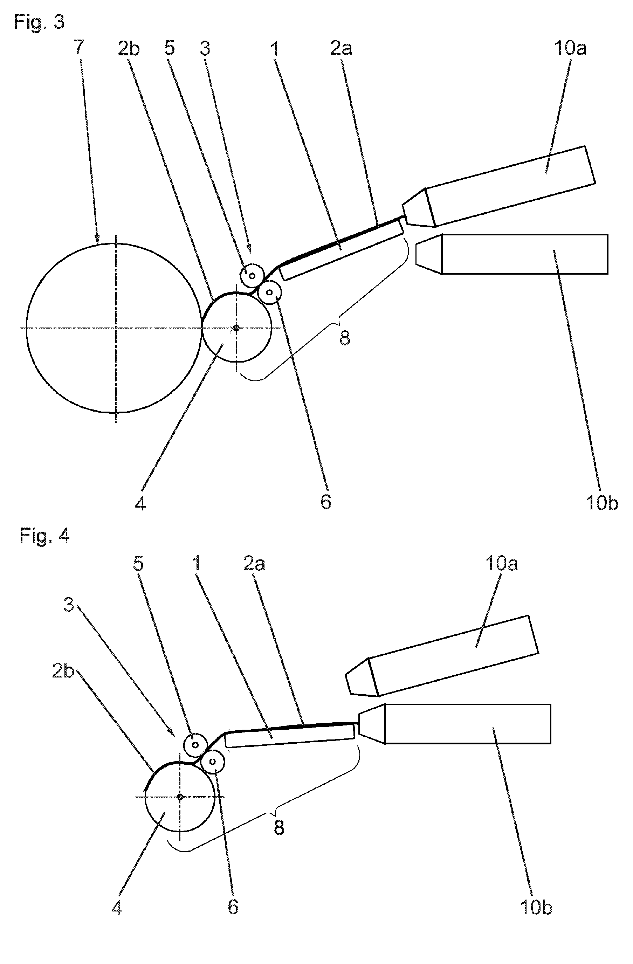

Die in sämtlichen Zeichnungsfiguren gezeigten Vorrichtungen weisen eine Zuführeinheit 1 zum Transportieren und Zuführen einer aus einer Rohgummimischung bestehenden extrudierten Rundschnur 2a auf, die jedoch lediglich in Fig. 3 und Fig. 4 dargestellt ist, ferner eine Kalandriereinrichtung 3 und eine Belegerolle 4. Die Kalandriereinrichtung weist bei sämtlichen gezeigten Ausführungsvarianten zwei Kalanderrollen 5, 6 mit zumindest im Wesentlichen übereinstimmenden Durchmessern auf, von welchen die eine einen zylindrischen, unkonturierten Außenumfang aufweist und die zweite mittels einer in Umfangsrichtung umlaufenden, nicht gezeigten Nut konturiert ausgeführt ist. Zwischen den beiden Kalanderrollen 5 und 6 wird die Kautschukmischungs-Rundschnur 2a zu einem Materialstreifen 2b verformt, der nur in Fig. 3 und Fig. 4 angedeutet ist, wobei die Querschnittsform des Materialstreifens 2b durch die Kontur der Nut in der Kalanderrolle 6 bestimmt wird. Je nach Nutkontur kann derart beispielsweise ein Materialstreifen 2b mit einem etwa linsensförmigen, einem etwa rechteckförmigen oder einem etwa trapezförmigen Querschnitt erstellt werden. Der Materialstreifen 2b wird mittels der Belegerolle 4 auf einen in Rotation versetzten Reifenrohling 7 oder unmittelbar auf eine Aufbautrommel durch spiraliges Wickeln aufgebracht und bildet derart einen Reifenbauteil, beispielsweise einen Laufstreifen, eine Seitenwand, die Innenschicht oder ein Wulstkernprofil. Die Zuführeinheit 1, die Belegerolle 4 und die dieser vorgesetzte Kalandriereinrichtung 3 sind Bestandteile einer Belegeeinheit 8.

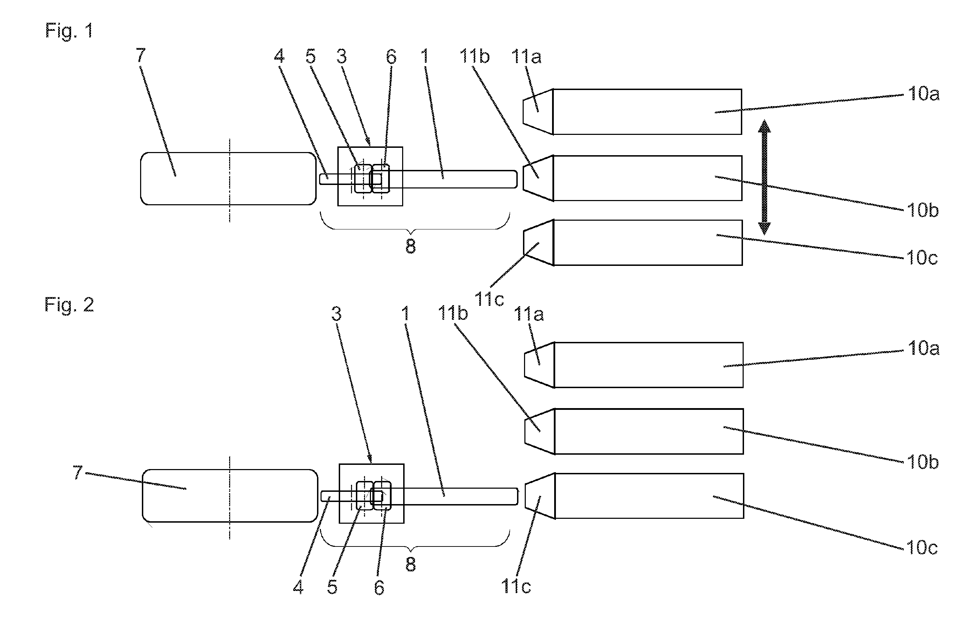

Bei der in Fig. 1 und Fig. 2 gezeigten Ausführungsvariante ist der Belegeeinheit 8 wahlweise einer von drei Extrudern 10a, 10b, 10c vorsetzbar, die, wie dargestellt, nebeneinander angeordnet sind. Die Extruder 10a bis 10c können auch auf einem Gerüst übereinander angeordnet sein. Jeder Extruder 10a, 10b und 10c verfügt über ein Extrudermundstück 11a, 11b und 11c, durch welches eine Rundschnur 2a aus einer bestimmten Kautschukmischung auf die Belegeeinheit 8 entlassen werden kann. Jeder Extruder 10a , 10b, 10c erzeugt eine Kautschukmischung, die sich von den Kautschukmischungen, welche in den anderen Extrudern erzeugt werden, unterscheidet. Die Extruder 10a, 10b und 10c sind in horizontaler Richtung oder bei einer Anordnung übereinander in vertikaler Richtung bewegbar bzw. verfahrbar, sodass auf die Belegeinheit 8 eine Rundschnur 2a wahlweise aus einer der erzeugten Kautschukmischungen abgelegt werden kann. Diese Maßnahme ermöglicht ein Aufbauen von verschiedenen Reifenbauteilen, die aus unterschiedlichen Kautschukmischungen bestehen sollen. Alternativ zu der in Fig. 1 und Fig. 2 gezeigten Ausführungsvariante können drei oder mehr Extruder an einer drehbaren Einrichtung positioniert werden, sodass durch Drehen jeweils jener Extruder in Position gebracht wird, dessen Kautschukmischung zum Aufbauen eines bestimmten Reifenbauteils gebraucht wird.

Bei der in Fig. 3 und 4 gezeigten Ausführungsvariante ist die Zuführeinheit 1 der Belegeeinheit 8 gegenüber den zwei vertikal übereinander angeordneten Extrudern 10a, 10b verstell- bzw. verschwenkbar, sodass wahlweise eine Rundschnur 2a aus der im Extruder 10a hergestellten Kautschukmischung (Fig. 3) oder eine Rundschnur 2a aus der im Extruder 10b hergestellten Kautschukmischung (Fig. 4) auf der Zuführeinheit 1 abgelegt wird. Die Extruder 10a, 10b können bereits derart angeordnet sein, dass ihre Position an die Ausrichtung der Zuführeinheit 1 in deren zwei möglichen Positionen angepasst ist.

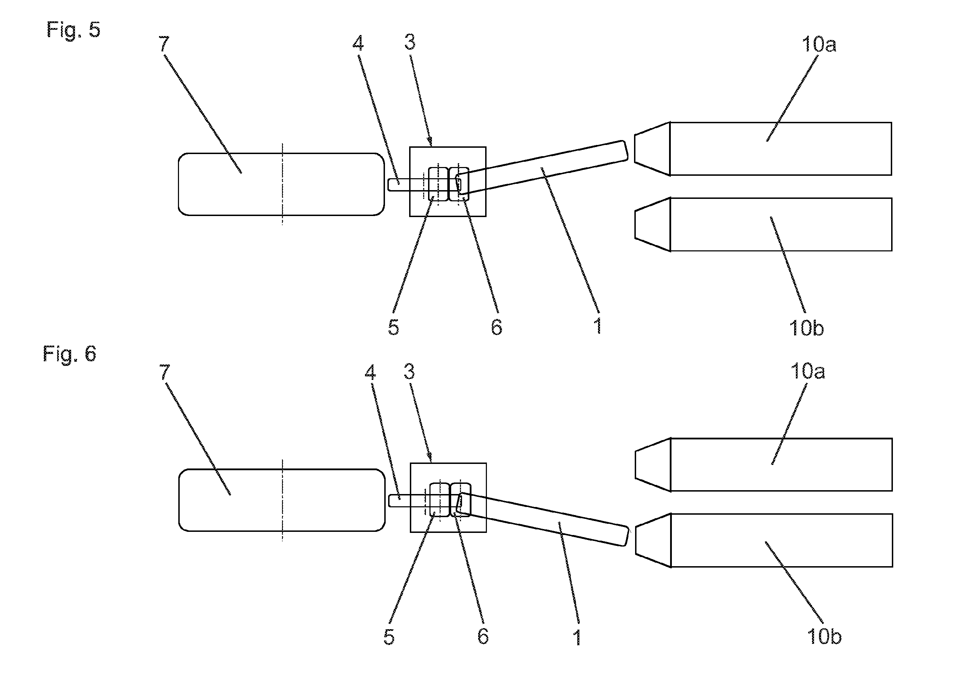

Fig. 5 und Fig. 6 zeigen eine Ausführungsvariante mit zwei nebeneinander angeordneten Extrudern 10a, 10b. Die Zuführeinheit 1 der Belegeeinheit 8 ist derart schwenkbar angeordnet, dass sie wahlweise gegenüber einem der beiden Extruder 10a, 10b ausgerichtet werden kann.

Die Erfindung ist auf die dargestellten Ausführungsvarianten nicht eingeschränkt. Insbesondere kann eine erfindungsgemäße Vorrichtung in unterschiedlichen Reifenaufbauverfahren eingesetzt werden. Die Reifenaufbautrommel kann zylindrisch oder auch in beliebiger Weise konturiert ausgeführt sein. Das Aufbringen der Materialstreifen kann sowohl auf dem Reifenrohling, wie dargestellt, oder, je nach Reifenbauteil, auch direkt auf einer Aufbautrommel erfolgen.

### Bezugszeichenliste

- 1: Zuführeinheit
- 2a: Rundschnur
- 2b: Materialstreifen
- 3: Kalandriereinrichtung
- 4: Belegerolle
- 5: Kalanderrolle
- 6: Kalanderrolle
- 7: Reifenrohling
- 8: Belegeeinheit
- 10a: Extruder
- 10b: Extruder
- 10c: Extruder
- 11a: Mundstück
- 11b: Mundstück
- 11c: Mundstück

## Patentansprüche

1. Vorrichtung zum Aufbringen eines Materialstreifens (2b) aus einer Kautschukmischung auf einen Reifenrohling (7) oder eine Aufbautrommel, mit einer Belegeeinheit (8), welche eine Zuführeinheit (1), eine Kalandriereinrichtung (3) für eine extrudierte Rundschnur (2a) und zumindest eine Belegerolle (5) für den kalandrierten Materialstreifen (2b) aufweist,
**dadurch gekennzeichnet,**
**dass** zumindest zwei Extruder (10a, 10b, 10c) vorgesehen sind, in welchen jeweils eine Kautschukmischung hergestellt wird, die sich von der oder den Kautschukmischung(en), welche in dem oder den anderen Extruder(n) hergestellt wird, unterscheidet, wobei die Position der Belegeeinheit (8) und/oder der Extruder (10a, 10b, 10c) derart veränderbar ist, dass wahlweise einer der Extruder gegenüber der Belegeinheit (8) positionierbar ist.

2. Vorrichtung nach Anspruch 1, **dadurch gekennzeichnet, dass** die Extruder (10a, 10b, 10c) neben- oder übereinander sowie verschieb- bzw. verstellbar angeordnet sind.

3. Vorrichtung nach Anspruch 1, **dadurch gekennzeichnet, dass** die Belegeeinheit (8) verschwenkbar oder verstellbar angeordnet ist.

4. Vorrichtung nach Anspruch 1, **dadurch gekennzeichnet, dass** die Zuführeinheit (1) verschwenkbar oder verstellbar angeordnet ist.
